# EUROPEAN PATENT SPECIFICATION

(11) **EP 1 201 458 B1**
(45) Date of publication and mention of the grant of the patent: **23.07.2003**
(21) Application number: 01112450.0
(22) Date of filing: 22.05.2001
(51) Int. Cl.: B60B 1/04, B60B 21/06, B60B 27/02

(54) **Spoked wheel for bicycles**
Speichenrad für ein Fahrrad
Roue à rayons pour bicyclette

(30) Priority: 24.10.2000 IT TO001007; 09.03.2001 IT TO010210
(43) Date of publication of application: 02.05.2002
(60) Divisional application: 03009131.8
(73) Proprietor: CAMPAGNOLO S.R.L., I-36100 Vicenza (IT)
(72) Inventor: Passarotto, Maurizio, 45100 Rovigo (IT)
(74) Representative: Marchitelli, Mauro

(56) References cited:
- FR-A- 2 786 435
- FR-A- 2 792 250
- US-A- 5 626 401
- US-A- 6 024 414
- PATENT ABSTRACTS OF JAPAN vol. 2000, no. 02, 29 February 2000 (2000-02-29) & JP 11 321201 A (NAKADE HIROO), 24 November 1999 (1999-11-24)

## Description

This invention relates to a spoked wheel for bicycle. More precisely, this invention relates to a wheel for bicycle comprising a rim, a hub, with a first and a second anchoring portion of the spokes, and a plurality of spokes, which connect the rim and the hub. The spokes are divided in a first and a second set, according to whether their internal extremities are anchored to the first or to the second anchoring portion of the spokes.

The technical problem on which this invention is based is that, in certain applications, the spokes of the first and the second set are subjected to different stress. Consequently, in use, the spokes of one set are subjected to a greater risk of breakage with respect to the spokes of the other set of the same wheel.

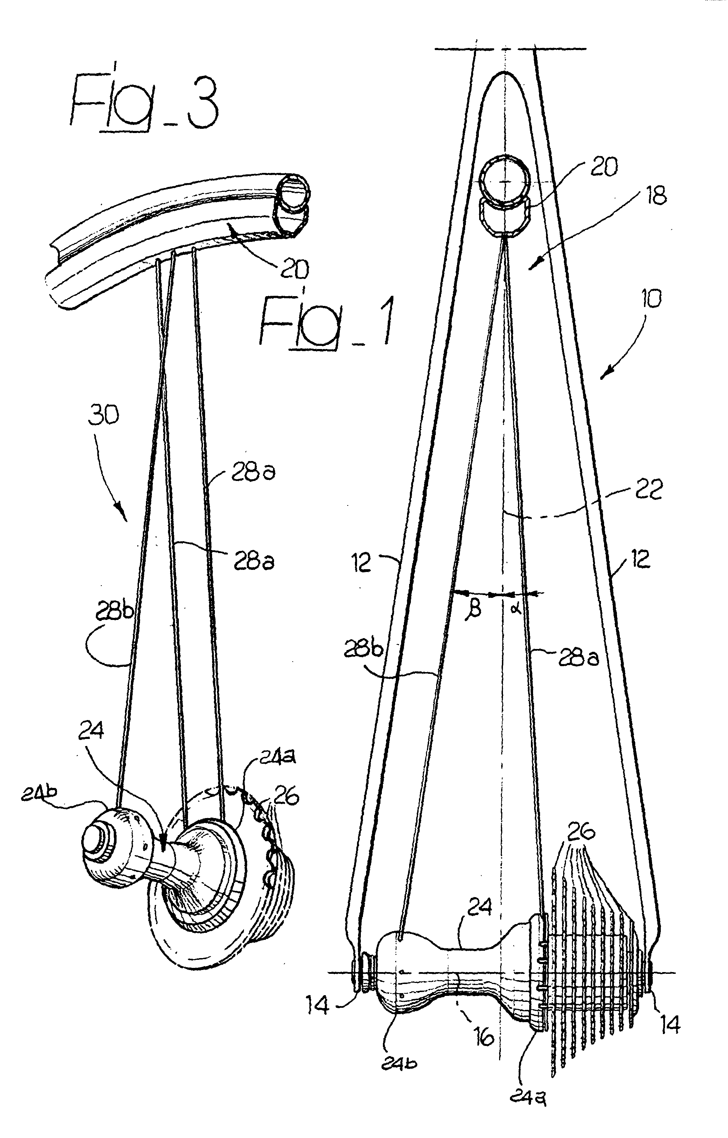

A first solution in which this problem occurs is illustrated in figure 1 of the accompanying drawings. This figure shows a rear wheel of the known type fitted on a bicycle frame 10 with two fork arms 12, which lower extremities are equipped with housings, generally indicated with numeral 14, for the fastening of a pin defining a transversal rotation axis 16. The rear wheel, generally indicated with numeral 18, comprises a rim 20, with a medium plane 22 arranged in a central position with respect to the arms 12, and the anchoring housings 14 of the frame 10. The wheel 18 comprises a hub 24, with a first and a second spoke anchoring portion, indicated with numerals 24a and 24b, respectively. The rim 20 and the hub 24 are connected by means of a first and a second set of spokes, indicated respectively with numerals 28a and 28b. The spokes 28a of the first set are anchored to the portion 24a of the hub 24 next to the set of sprockets 26, while the spokes 28b of the second set are anchored to the portion 24b of the hub 24, on the side which is most distant from the sprocket set 26.

Due to the volume of the set of sprockets 26 in the direction of the transversal axis 16, the spokes 28a and 28b have a different slant with respect to the medium plane 22 of the wheel 18. In figure 1, the slant angles of the spokes 28a and 28b with respect to the medium plane 22 are indicated with references α and β, respectively. The difference between the angles α and β will be proportional to the axis volume of the sprocket set 26. More precisely, the spokes 28a present slightly different slant angles α₁, α₂ due to the crossing of adjacent spokes. The angle α is considered as the mean angle of the angles α₁, α₂.

In traditional solutions, the fact that spokes 28a and 28b have a different slant with respect to the medium plan 22 means that these spokes are subjected to reciprocally different tensioning forces. In particular, the tensioning force of the spokes 28a must be substantially higher than the tensioning force of the spokes 28b for holding the rim 20 centred with respect to the medium plan 22 of the wheel. Indicating by Fₐ and F_{b} the mean tensioning forces of the spokes 28a and 29b, the components of these forces in the direction which is parallel to the rotation axis of the wheel must be such to ensure the correct centring of the rim 20 with respect to the medium plane 22.

Consequently, in this known solution, the spokes of the wheel located on the right-hand side of the wheel (adjacent to sprocket set) which are subjected to a higher tensioning force located on the left-hand side of the wheel (the side opposite the sprocket set).

In other types of applications, the spokes located on the left-hand side of the wheel may be subjected to a higher risk of breakage than the spokes located on the right-hand side. An example of this situation is described in document EP-A-0896887 by Mavic. This document describes a rear wheel for bicycle, in which the spokes located on the side of the sprockets are essentially arranged in the radial direction with respect to the rotation axis of the wheel and the spokes anchored to the side of the hub opposite to the sprockets are slanted and crossed. With an arrangement of this kind, as in the traditional solutions, the drive torque transmitted by the sprockets to the rim during bicycle use is nearly all transmitted to the slanted spokes, considering that the spokes arranged in the radial direction are not essentially capable of transmitting torque. Consequently, in a wheel of this type, the spokes arranged on the opposite side of the sprockets are more subjected to the risk of breakage.

To avoid high tension in and risk of breakage of the spokes, it is known to use a different number of spokes on each side of the wheel, see EP 896 887 A, which document discloses a wheel according to the preamble of claim 1.

The purpose of this invention is to provide a spoked wheel for bicycle, the spokes at which are less subjected to the risk of breakage, and is a esthetically better in appearance.

According to this invention, this purpose is reached by means of a spoked wheel for bicycle which characteristics are described in the claims.

This invention will be better explained by the following detailed descriptions with reference to the accompanying figure as non-limiting example, whereas:
- figure 1, described above, is a partial axial cross-section of a rear wheel fitted on the frame of a bicycle,
- figure 2 is perspective view of a first form of embodiment of a wheel according to this invention,
- figure 3 is a partial perspective view of the wheel according to this invention,
- figure 4 is a perspective view of a second form of embodiment of a wheel according to this invention,
- figure 5 is a lateral view according to the arrow V of figure 4,

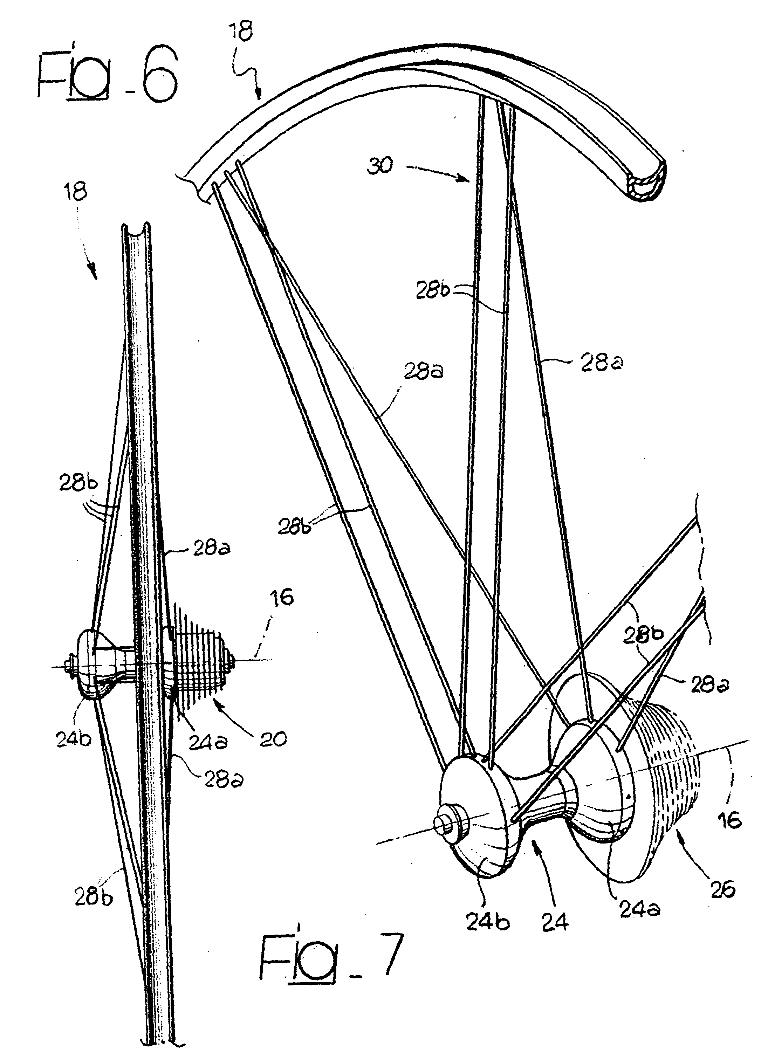

- figure 6 is a perspective view of a larger scale of the part indicated by arrow VI in figure 4, and
- figure 7 is a front view according to the arrow VII in figure 4.

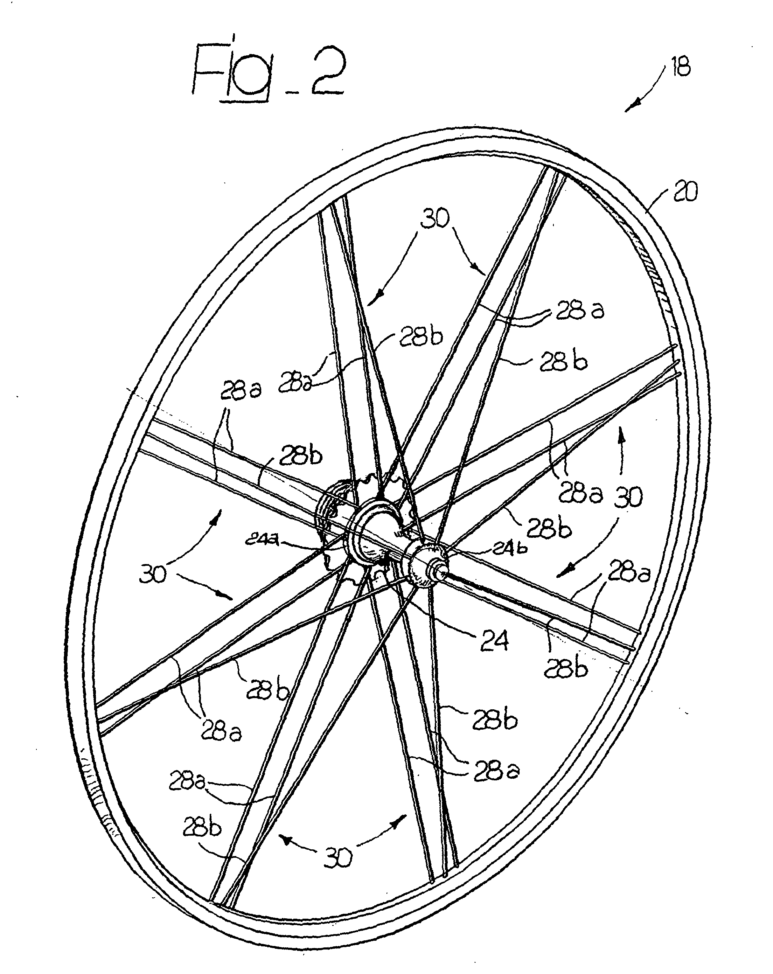

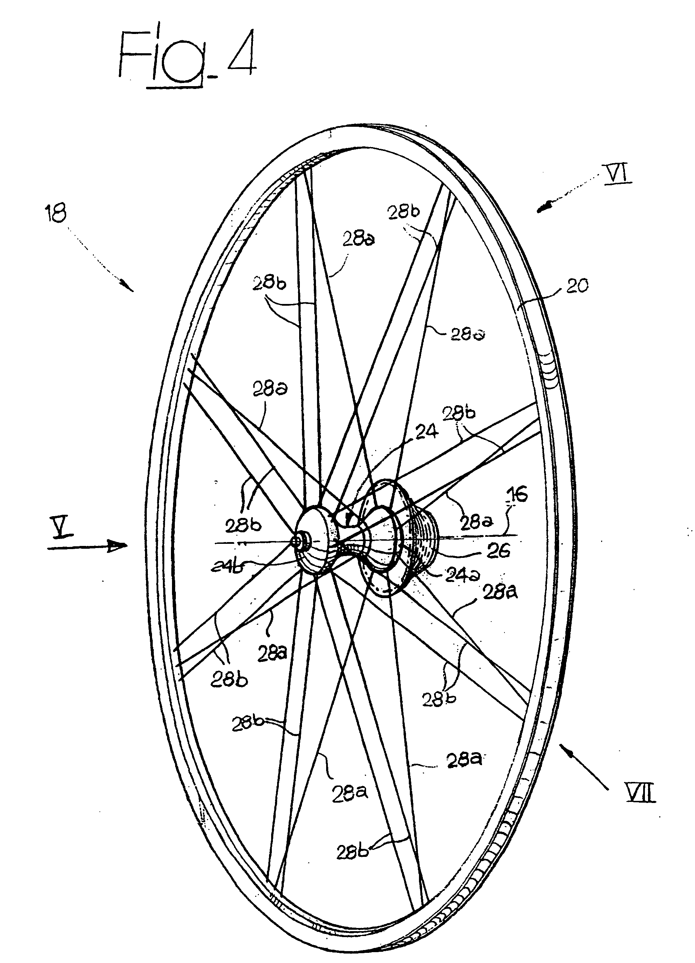

In figures 2 and 3, the parts corresponding to those described above are indicated with the same reference numerals.

In the wheel 18 according to this invention, the spokes 28a of the first set are double in number with respect to the spokes 28b of the second set. The spokes 28a and 28b are grouped in a plurality of reciprocally equidistant triads 30. Each triad 30 comprises two spokes 28a of the first set and a spoke 28b of the second set, which is arranged in a central position between the respective two spokes 28a of the first set. The spokes 28a of each triad 30 are preferably respectively parallel and the spoke 28b of the triad 30 lies on a radial plane, which is equidistant with respect to the spokes 28a. The fastening method of the spokes 28a, 28b to the hub 24 and the rim 20 can be of any type. As appears in figure 2, the wheel 18 from an aesthetic point of view, assumes the configuration of a "spoked" wheel, in which each "spoke" consists of a triad of spokes 30. The number of triads of spokes 30 can vary with respect to the form of embodiment illustrated in figure 2. For example, wheels with 5, 6, 7, 8, 9 or 10 triads can be made with a total number of spokes equal to 15, 18, 21, 24, 27 and 30, respectively.

The solution according to the first form of embodiment of this invention essentially permits halving the tensioning force of the spokes 28a with respect to the spokes 28b of the second set, whereby considerably reducing the risk of breakage of the spokes next to the sprockets which, in this first form of embodiment, is considerably more subjected to the risk of breakage.

Figures from 4 to 7 illustrate a second form of embodiment of a wheel according to this invention. Also in this second form of embodiment, the parts corresponding to those described above are shown with the same numeral references. Particularly, as in the previous form of embodiment, the spokes anchored to the side 24a of the hub 24 are indicated with numeral 28a and the spokes anchored on the side 24b of the hub 24 are indicated with numeral 24b. As will appear clear in the description that follows, in this second form of embodiment, the spokes most subjected to the risk of breakage are those arranged on the left-hand side.

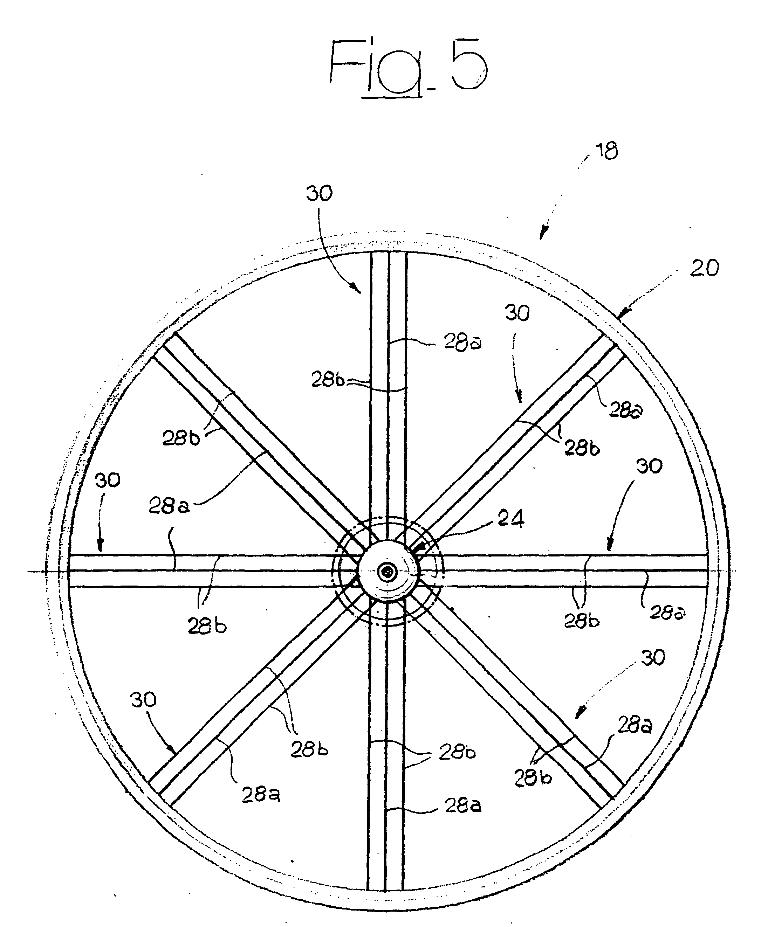

In this second form of embodiment, each of the spokes 28a in the first set lies on a plane crossing the axis 16 of the hub 24. Consequently, in a view along a parallel direction to the axis of rotation 16, as that shown in figure 5, the spokes 28a of the first set are perpendicular to the axis of rotation 16.

Each of the spokes 28b of the second set is slanted with respect to a radial direction of the rim 20 in a view along a direction parallel to the axis of rotation 20. Herein, the term "slanted" means that the spoke does not lie on a plane containing the axis of rotation 16.

Taken the plane containing the axis of rotation 16 and one of the spokes 28a as the reference, each of the spokes 28b of the same triad 30 can consequently be either parallel or slanted with respect to this plane.

According to this second form of embodiment of this invention, the spokes 28b of the second set are double in number with respect to the number of spokes 28a in the first set. The spokes 28a, 28b of the wheel according to this invention are preferably arranged in equidistant groups 30. Each group comprises two spokes 28b of the second set and a spoke 28a of the first set arranged in central position with respect to the corresponding spokes 28b of the same group.

The groups of spokes 30 confer the appearance of a "spoked" wheel to the wheel 10. The number of such "spokes" can vary, for example, from 4 to 10, with a total number of spokes variable from 12 to 30. In each "spoke" 30, the two spokes 28b located on the same side can be reciprocally parallel as shown, for example, in the figures, or can converge towards the rim 12, or can converge towards the hub 14. This naturally also refers to the first form of embodiment.

During use, the cyclist impresses a force on the pedals which, via the gears, the chain and the sprockets, is transformed in a drive torque applied to the rotation axis 16 of the hub 24. The spokes 28a of the first set, being arranged in a radial direction with respect to axis 16, are not essentially capable of transferring torque to the rim 20. Consequently, the drive torque applied by the sprocket set 26 to the hub 24 impresses torsion on the hub body and transfers it to the rim 20 by means of the spokes 28b of the second set. With respect to a traditional wheel with the same total number of spokes, the solution according to this invention permits increasing the number of drive torque transmitting spokes, which reduces the stress on the spokes due to torque transmission and reduces the risk of breakage of the spokes.

The arrangement of the spokes 28a, 28b in triads is particularly advantageous because the axial forces are locally balanced (in parallel direction to the rotation axis of the wheel) applied by the spokes to the rim 20.

Despite that this description expressly refers to rear wheels, the solution according to this invention can be applied to a front wheel in the event in which the technical problems illustrated at the beginning of this description subsists.

## Claims

1. Spoked wheel for bicycle, comprising a rim (20), a hub (24), with a first and a second anchoring portion of the spokes (24a, 24b) and a plurality of spokes (28a, 28b) connecting the hub (24) to the rim (20), in which a first set of spokes (28a) is anchored to the first anchoring portion (24a) and a second set of spokes (28b) is anchored to the second anchoring portion (24b), **characterised in that** the spokes of one set (28a, 28b) are double the number of the spokes (28a, 28b) of the other set.

2. Wheel according to claim 1, **characterised in that** the spokes (28a, 28b) are grouped in triads (30), each triad comprising two spokes (28a, 28b) from one set and a spoke (28a, 28b) from the other set.

3. Wheel according to claim 2, **characterised in that** said triads (30) are equidistant along the circumference.

4. Wheel according to claim 3, **characterised in that** the spokes of each triad (30) anchored on the same side of the hub (24) are essentially parallel.

5. Wheel according to claim 3, **characterised in that** the spokes of each triad (30) anchored on the same side of the hub (24) converge towards the rim (20).

6. Wheel according to claim 3, **characterised in that** the spokes of each triad (30) anchored on the same side of the hub (24) diverge towards the rim (20).

7. Wheel according to any of the claims from 4 to 6, **characterised in that** one spoke (28a, 28b) of each triad (30) is contained on a radial plane of the wheel arranged in central position with respect to the spokes (28a, 28b) of the same triad (30) anchored on the same side of the hub (24).

8. Wheel according to claim 2, **characterised in that** within each triad (30), the spokes of the first set of spokes (28a) and the spokes of the second set of spokes (28b) have different inclinations with respect to a medium plane (22) of the wheel and that within each group of spokes (30), the axial forces applied by the spokes to the rim (20) in a direction parallel to the rotation axis of the wheel are locally balanced.

9. Wheel according to claim 1, **characterised in that** said set of double spokes (28a) is placed on the side of the wheel carrying a sprocket assembly.

10. Wheel according to claim 1, **characterised in that** the spokes of the set of double spokes are arranged along directions which do not lie in radial planes extending from the wheel axis.

11. Wheel according to claim 1, **characterised in that** said set of double spokes (28b) is placed on the side of the wheel opposite to the one carrying a sprocket assembly.

12. Wheel according to claim 1, **characterised in that** the angle between adjacent triads is greater than the angle covered by each triad.

13. wheel according to claim 3, **characterised in that** the spokes are grouped in seven triads.

14. Wheel according to claim 3, **characterised in that** the spokes are grouped in eight triads.

15. Wheel according to claim 3, **characterised in that** the spokes are grouped in nine triads.

16. Wheel according to claim 3, **characterised in that** the single spoke (28b) of the second set within each triad (30) is arranged in the middle between the two spokes (28a) of the first set.

17. Wheel according to claim 8, **characterised in that** within each of said triads (30) of spokes, the spokes (28a, 28b) of the set of two spokes present substantially the same tension.

18. Wheel according to claim 8, **characterised in that** within each of said triads (30) of spokes, the spokes (28a, 28b) of the set of two spokes present a tension, along the direction parallel to the rotation axis of the wheel, which is substantially half of the tension of the single spoke (28b).

## Patentansprüche

1. Speichenrad für ein Fahrrad, das eine Felge (20), eine Nabe (24) mit einem ersten und einem zweiten Verankerungsabschnitt der Speichen (24a, 24b) und eine Vielzahl von Speichen (28a, 28b), die die Nabe (24) mit der Felge (20) verbinden, umfasst, wobei eine erste Gruppe von Speichen (28a) an dem ersten Verankerungsabschnitt (24a) verankert ist und eine zweite Gruppe von Speichen (28b) an dem zweiten Verankerungsabschnitt (24b) verankert ist, **dadurch gekennzeichnet, dass** die Speichen einer Gruppe (28a, 28b) das Doppelte der Anzahl der Speichen (28a, 28b) der anderen Gruppe betragen.

2. Rad nach Anspruch 1, **dadurch gekennzeichnet, dass** die Speichen (28a, 28b) in Dreiergruppen (30) zusammengefasst sind, wobei jede Dreiergruppe zwei Speichen (28a, 28b) aus einer Gruppe und eine Speiche (28a, 28b) aus der anderen Gruppe umfasst.

3. Rad nach Anspruch 2, **dadurch gekennzeichnet, dass** die Dreiergruppen (30) gleichmäßig am Umfang entlang beabstandet sind.

4. Rad nach Anspruch 3, **dadurch gekennzeichnet, dass** die Speichen jeder Dreiergruppe (30), die auf der gleichen Seite der Nabe (24) verankert sind, im Wesentlichen parallel sind.

5. Rad nach Anspruch 3, **dadurch gekennzeichnet, dass** die Speichen jeder Dreiergruppe (30), die auf der gleichen Seite der Nabe (24) verankert sind, in Richtung der Felge (200) zusammenlaufen.

6. Rad nach Anspruch 3, **dadurch gekennzeichnet, dass** die Speichen jeder Dreiergruppe (30), die auf der gleichen Seite der Nabe (24) verankert sind, in Richtung der Felge (20) auseinanderlaufen.

7. Rad nach einem der Ansprüche 4 bis 6, **dadurch gekennzeichnet, dass** eine Speiche (28a, 28b) jeder Dreiergruppe (30) in einer radialen Ebene des Rades liegt, die an einer mittigen Position in Bezug auf die Speichen (28a, 28b) der gleichen Dreiergruppe (30) angeordnet ist, die auf der gleichen Seite der Nabe (24) verankert sind.

8. Rad nach Anspruch 2, **dadurch gekennzeichnet, dass** in jeder Dreiergruppe (30) die Speichen der ersten Gruppe von Speichen (28a) und die Speichen der zweiten Gruppe von Speichen (28b) unterschiedliche Neigungen in Bezug auf eine Mittelebene (22) des Rades haben und dass in jeder Gruppe von Speichen (30) die axialen Kräfte, die von den Speichen auf die Nabe (20) in einer Richtung parallel zur Drehachse des Rades ausgeübt werden, lokal im Gleichgewicht sind.

9. Rad nach Anspruch 1, **dadurch gekennzeichnet, dass** sich die Gruppe von Doppelspeichen (28a) auf der Seite des Rades befindet, die eine Kettenradanordnung trägt.

10. Rad nach Anspruch 1, **dadurch gekennzeichnet, dass** die Speichen der Gruppe von Doppelspeichen in Richtungen angeordnet sind, die nicht in radialen Ebenen liegen, die sich von der Radachse aus erstrecken.

11. Rad nach Anspruch 1, **dadurch gekennzeichnet, dass** sich die Gruppe von Doppelspeichen (28b) auf der Seite des Rades gegenüber der befindet, die eine Kettenradanordnung trägt.

12. Rad nach Anspruch 1, **dadurch gekennzeichnet, dass** der Winkel zwischen benachbarten Dreiergruppen größer ist als der Winkel, der von jeder Dreiergruppe eingenommen wird.

13. Rad nach Anspruch 3, **dadurch gekennzeichnet, dass** die Speichen in sieben Dreiergruppen zusammengefasst sind.

14. Rad nach Anspruch 3, **dadurch gekennzeichnet, dass** die Speichen in acht Dreiergruppen zusammengefasst sind.

15. Rad nach Anspruch 3, **dadurch gekennzeichnet, dass** die Speichen in neun Dreiergruppen zusammengefasst sind.

16. Rad nach Anspruch 3, **dadurch gekennzeichnet, dass** die einzelne Speiche (28b) der zweiten Gruppe in jeder Dreiergruppe (30) in der Mitte zwischen den zwei Speichen (28a) der ersten Gruppe angeordnet ist.

17. Rad nach Anspruch 8, **dadurch gekennzeichnet, dass** innerhalb jeder der Dreiergruppen (30) von Speichen die Speichen (28a, 28b) der Gruppe von zwei Speichen im Wesentlichen die gleiche Spannung aufweisen.

18. Rad nach Anspruch 8, **dadurch gekennzeichnet, dass** in jeder der Dreiergruppen (30) von Speichen die Speichen (28a, 28b) der Gruppe von zwei Speichen eine Spannung in der Richtung parallel zur Drehachse des Rades aufweisen, die im Wesentlichen die Hälfte der Spannung der einzelnen Speiche (28b) ausmacht.

## Revendications

1. Roue à rayons pour bicyclette, comprenant une jante (20), un moyeu (24), doté d'une première et d'une deuxième portions d'ancrage de rayons (24a, 24b) et d'une pluralité de rayons (28a, 28b) reliant le moyeu (24) à la jante (20), dans laquelle un premier ensemble de rayons (28a) est ancré dans la première portion d'ancrage (24a) et un deuxième ensemble de rayons (28b) est ancré dans la deuxième portion d'ancrage (24b), **caractérisée en ce que** les rayons d'un ensemble (28a, 28b) comporte le double de rayons (28a, 28b) de l'autre ensemble.

2. Roue selon la revendication 1, **caractérisée en ce que** les rayons (28a, 28b) sont groupés en triades (30), chaque triade comprenant deux rayons (28a, 28b) d'un ensemble et un rayon (28a, 28b) de l'autre ensemble.

3. Roue selon la revendication 2, **caractérisée en ce que** lesdites triades (30) sont équidistantes le long de la circonférence.

4. Roue selon la revendication 3, **caractérisée en ce que** les rayons de chaque triade (30), ancrés du même côté du moyeu (24), sont sensiblement parallèles.

5. Roue selon la revendication 3, **caractérisée en ce que** les rayons de chaque triade (30), ancrés du même côté du moyeu (24), convergent vers la jante (20).

6. Roue selon la revendication 3, **caractérisée en ce que** les rayons de chaque triade (30), ancré du même côté du moyeu (24), divergent vers la jante (20)

7. Roue selon l'une quelconque des revendications 4 à 6, **caractérisée en ce qu'**un rayon (28a, 28b) de chaque triade (30) est contenu dans un plan radial de la roue agencé en position centrale par rapport aux rayons (28a, 28b) de la même triade (30), ancrés du même côté du moyeu (24).

8. Roue selon la revendication 2, **caractérisée en ce que**, à l'intérieur de chaque triade (30), les rayons du premier ensemble de rayons (28a) et les rayons dudeuxième ensemble de rayons (28b) ont des inclinaisons différentes par rapport à un plan médian (22) de la roue et **en ce que**, à l'intérieur de chaque groupe de rayons (30), les forces axiales appliquées par les rayons à la jante (20) dans une direction parallèle à l'axe de rotation de la roue sont localement équilibrées.

9. Roue selon la revendication 1, **caractérisée en ce que** ledit ensemble de doubles rayons (28a) est placé du côté de la roue supportant un ensemble de pignons.

10. Roue selon la revendication 1, **caractérisée en ce que** les rayons de l'ensemble de doubles rayons sont agencés dans des directions qui ne se trouvent pas dans des plans radiaux s'étendant depuis l'axe de la roue.

11. Roue selon la revendication 1, **caractérisée en ce que** ledit ensemble de doubles rayons (28b) est placé du côté de la roue qui est opposé à celui supportant un ensemble de pignons.

12. Roue selon la revendication 1, **caractérisée en ce que** l'angle compris entre des triades adjacentes est supérieur à l'angle couvert par chaque triade.

13. Roue selon la revendication 3, **caractérisée en ce que** les rayons sont groupés en sept triades.

14. Roue selon la revendication 3, **caractérisée en ce que** les rayons sont groupés en huit triades.

15. Roue selon la revendication 3, **caractérisée en ce que** les rayons sont groupés en neuf triades.

16. Roue selon la revendication 3, **caractérisée en ce que** l'unique rayon (28) du deuxième ensemble à l'intérieur de chaque triade (30) est agencé au milieu entre deux rayons (28a) du premier ensemble.

17. Roue selon la revendication 8, **caractérisée en ce que**, à l'intérieur de chacune desdites triades (30) de rayons, les rayons (28a, 28b) de l'ensemble de deux rayons présentent sensiblement la même tension.

18. Roue selon la revendication 8, **caractérisée en ce que**, à l'intérieur de chacune desdites triades (30) de rayons, les rayons (28a, 28b) de l'ensemble de deux rayons présentent une tension, dans la direction parallèle à l'axe de rotation de la roue, qui est sensiblement la moitié de la tension l'unique rayon (28b).
